# EUROPEAN PATENT APPLICATION

(11) **EP 2 833 371 A1**
(43) Date of publication of application: **04.02.2015**
(21) Application number: 13768428.8
(22) Date of filing: 21.03.2013
(51) Int. Cl.: H01B 7/02, H01B 3/30, H01B 3/42, H01F 5/06, H01F 27/28

(54) **MULTILAYER INSULATED ELECTRIC WIRE AND ELECTRIC OR ELECTRONIC EQUIPMENT USING THE SAME**

(30) Priority: 27.03.2012 JP 2012070843
(71) Applicant: Furukawa Electric Co., Ltd., Chiyoda-ku Tokyo 100-8322 (JP); Furukawa Magnet Wire Co., Ltd., Tokyo 100-0005 (JP)
(72) Inventor: IKEDA, Keisuke, Tokyo 100-8322 (JP); OYA, Makoto, Tokyo 100-8322 (JP); MUTO, Daisuke, Tokyo 100-8322 (JP); TOMIZAWA, Keiichi, Tokyo 100-0005 (JP)
(74) Representative: Forstmeyer, Dietmar
(86) International application number: PCT/JP2013/058080
(87) International publication number: WO 2013/146531

(57) **Abstract**

The present invention provides a multilayer insulated electric wire to achieve a good balance between heat resistance and voltage resistance characteristics, then satisfy IEC standards Pub. 61558 which require strict voltage regulation, and electric or electronic equipment such as transformer formed by winding the insulated electric wire.

The present invention is a multilayer insulated electric wire including two or more insulating layers, wherein at least one layer of the insulating layers other than the outermost layer is an insulating layer containing a resin having a melting point of 200°C or higher and a tensile modulus of elasticity at 25°C of 1000 MPa or less, and the multilayer insulated electric wire is coated with a resin material (also simply called a resin) having a tensile modulus of elasticity at 25°C of 1000 MPa or more as the outermost layer, and electric or electronic equipment such as transformer formed by winding the insulated electric wire.

## Description

### TECHNICAL FIELD

The present invention relates to a multilayer insulated electric wire having an insulating layer composed of at least two extruded coating layers, and electric or electronic equipment using the same.

### BACKGROUND ART

The construction of a transformer is prescribed by IEC (International Electrotechnical Communication) standards Pub. 60950, etc. Namely, these standards provide that at least three insulating layers be formed between primary and secondary windings (an enamel film which covers a conductor of a winding is not authorized as an insulating layer) or that the thickness of an insulating layer be 0.4 mm or more. The standards also provide that the creepage distance between the primary and secondary windings, which varies depending on applied voltage, be 5 mm or more, that the transformer withstands a voltage of 3,000 V, applied between the primary and secondary sides, for one minute or more, and the like.

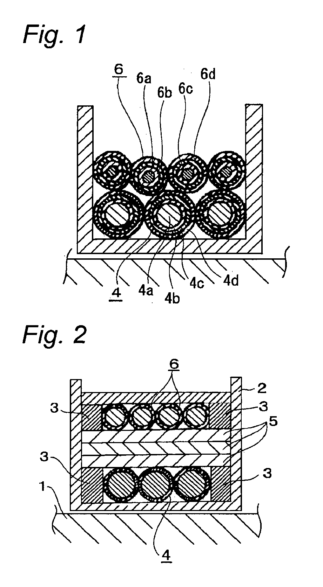

According to such standards, as a currently prevailing transformer, a construction having insulating barriers 3 and an insulating tape 5, and illustrated in a cross-section view of FIG. 2 has been adopted. An enameled primary winding 4 is wound around a bobbin 2 on a ferrite core 1 in a manner such that insulating barriers 3 for securing the creepage distance are arranged individually on the opposite sides of the peripheral surface of the bobbin 2. An insulating tape 5 is wound for at least three turns on the primary winding 4, additional insulating barriers 3 for securing the creepage distance are arranged on the insulating tape, and an enameled secondary winding 6 is then wound around the insulating tape.

In recent years, however, a transformer having a structure that includes neither an insulating barrier 3 nor an insulating tape layer 5, as shown in FIG. 1, has been used instead of the transformer having the sectional structure shown in FIG. 2. The transformer shown in FIG. 1 has advantages in that the overall size thereof can be reduced compared to the transformer having the structure shown in FIG. 2 and that an operation of winding the insulating tape can be omitted.

In manufacturing the transformer shown in FIG. 1, it is necessary, in consideration of the aforesaid IEC standards, that at least three insulating layers 4b (6b), 4c (6c), and 4d (6d) are formed on the outer peripheral surface on one or both of conductors 4a (6a) of the primary winding 4 and the secondary winding 6 since the transformer has no insulating barriers and insulating tapes.

As such a winding having three insulating layers, there is known a structure in which an insulating tape is first wound around a conductor to form a first insulating layer thereon, and is further wound to form second and third insulating layers in succession, so as to form three insulating layers that are separable from one another (see, for example, Patent Literature 1). In the case of the above-mentioned insulating tape, however, because winding the tape is an unavoidable operation, the efficiency of production is extremely low, and thus the cost of the electric wire is conspicuously increased.

In attempts to solve such problems, a multilayer insulated electric wire is put to practical use and is manufactured by extruding a modified polyester resin, the crystallization of which has been controlled to inhibit a decrease in the molecular weight thereof, or a polyester elastomer around a conductor to form first and second insulating layers, and polyamide resin extruded around the second insulating layer to form a third insulating layer (see, for example, Patent Literatures 2 and 3). In association with recent miniaturization of electric or electronic equipment, an influence of heat generation on the equipment has been concerned, so a multilayer insulated electric wire with improved heat resistance has been proposed, which is obtained by extruding a polyethersulfone resin as an inner layer and a polyamide resin as an outermost layer to cover the outer periphery of a conductor (see, for example, Patent Literature 4).

The above-described insulated electric wire has been developed for the application of electric or electronic equipment in accordance with IEC standards Pub. 60950. It is desired that the insulated electric wire which can realize downsizing and high efficiency is developed for the application of home electronics in accordance with IEC standards Pub. 61558. Therefore, there is a need for a multilayer insulated electric wire in accordance with IEC standards Pub. 61558 which require strict voltage regulation.

However, in the coating resins used in conventional multilayer insulated electric wires, the level of voltage required by the IEC standards cannot be achieved. That is because, in conventional coating resins, when a coating resin is subjected to a thermal shock in a test, thermal aging of the resin occurs, the mechanical strength is decreased, and cracks caused by heat-induced stress are generated. Therefore, in order to achieve the voltage standards, it is necessary to achieve a balance between heat resistance and voltage resistance characteristics (also called electrical characteristics) of multilayer insulated electric wires.

### CITATION LIST

### PATENT LITERATURES

Patent Literature 1: JU-A-3-56112 ("JU-A" means unexamined published Japanese utility model registration application)
Patent Literature 2: Japanese Patent No.4762474
Patent Literature 3: JP-A-6-223634 ("JP-A" means unexamined published Japanese patent application)
Patent Literature 4: JP-A-10-134642

### SUMMARY OF INVENTION

### TECHNICAL PROBLEM

An object of the present invention is to provide a multilayer insulated electric wire to achieve a good balance between heat resistance and voltage resistance characteristics, then to satisfy IEC standards Pub. 61558 which require strict voltage regulation as described above.

Further, an object of the present invention is to provide highly reliable electric or electronic equipment such as transformer formed by winding the multilayer insulated electric wire having excellent voltage resistance characteristics.

### SOLUTION TO PROBLEM

The objects of the present invention have been achieved by the multilayer insulated electric wire and the transformer using the same described below.
(1) A multilayer insulated electric wire including two or more insulating layers, wherein at least one layer of the insulating layers other than the outermost layer is an insulating layer containing a resin having a melting point of 200°C or higher and a tensile modulus of elasticity at 25°C of 1000 MPa or less, and the multilayer insulated electric wire is coated with a resin material (also simply called a resin) having a tensile modulus of elasticity at 25°C of 1000 MPa or more as the outermost layer.
(2) The multilayer insulated electric wire as described in the above item (1), wherein the resin that forms the insulating layers other than the outermost layer is a polyester resin in which a repeating unit for the diol component that constitutes the polyester resin is represented by the formula

   -[O-(L¹-O)ₘ]-

   wherein L¹ represents an alkylene group, m represents an integer of 1 or more, and the sum of the carbon numbers of all of L¹'s in one repeating unit is 4 or more.
(3) The multilayer insulated electric wire as described in the above item (2), wherein L¹ is an alkylene group having 4 or more carbon atoms, and m is an integer of 1 or more.
(4) The multilayer insulated electric wire as described in any one of the above items (1) to (3), wherein the outermost layer is an extruded coating layer containing a polyamide resin.
(5) Electric or electronic equipment formed by using the multilayer insulated electric wire as described in any one of the above items (1) to (4) as a coil or lead wire of a transformer that is incorporated into the electric or electronic equipment.

Other and further features and advantages of the invention will appear more fully from the following description, appropriately referring to the accompanying drawings.

### ADVANTAGEOUS EFFECTS OF INVENTION

The multilayer insulated electric wire of the present invention has voltage resistance characteristics for satisfying IEC standards Pub. 61558 to be required as home electronics while holding the heat resistance level higher than the class B (UL1446). The multilayer insulated electric wire of the present invention can satisfy requirements such as a heat resistance test and voltage resistance characteristics, by using, as insulating layers, a resin material having a tensile modulus of elasticity at 25°C of 1000 MPa or more in the outermost layer in combination with a resin having a melting point of 200°C or higher and a tensile modulus of elasticity at 25°C of 1000 MPa or less in an inner layer of the outermost layer.

### BRIEF DESCRIPTION OF DRAWINGS

{Fig. 1}
   FIG. 1 is a cross-sectional view showing an example of a transformer having a structure in which a three-layer insulated electric wire is used as a winding.
{Fig. 2}
   FIG. 2 is a cross-sectional view showing one example of a transformer having a conventional structure.

### DESCRIPTION OF EMBODIMENTS

As for the multilayer insulated electric wire of the present invention, the insulating layers to be covered is composed of at least two layers, preferably three layers. As for one preferred embodiment of a multilayer insulated electric wire of the present invention, resins for constituting each layer will be described.

As for the multilayer insulated electric wire of the present invention, at least one layer of the inner layer (insulating layers other than the outermost layer) is an extruded insulating layer made by a resin having a melting point of 200°C or higher and a tensile modulus of elasticity at 25°C of 1000 MPa or less. Since the required heat resistance cannot be obtained with a resin having a melting point of lower than 200°C, the resin is inappropriate for a coating layer. A preferred melting point is 225°C or higher. The upper limit of the melting point is not particularly limited, but the upper limit is practically 280°C or lower.

A tensile modulus of elasticity at 25°C is preferably 900 MPa or less. The lower limit of the tensile modulus of elasticity at 25°C is not particularly limited, but the lower limit is practically 250 MPa or more. When a resin having a tensile modulus of elasticity at 25°C of more than 1000 MPa is used, thermal aging is likely to occur in the resin that constitutes the coating layer. When thermal aging occurs, the mechanical strength of the resin decreases, and cracks caused by heat-induced stress are generated. Therefore, the voltage resistance characteristics of the multilayer insulated electric wire may deteriorate.

When there is another inner layer that does not satisfy the above-described requirements, there are no particular limitations as long as a conventional insulating layer is used, but it is preferable that the other inner layer contain a resin having a melting point of 200°C or higher.

Example of a crystalline resin having a melting point of 200 °C or higher and a tensile modulus of elasticity at 25°C of 1000 MPa or less includes a fluororesin. Examples of fluororesins include ETFE (ethylene-tetrafluoroethylene copolymer) and PFA (tetrafluoroethylene-perfluoroalkoxyethylene copolymer).

A preferred example of a crystalline resin having a melting point of 200 °C or higher and a tensile modulus of elasticity at 25°C of 1000 MPa or less may be a polyester resin. A more preferred polyester resin has a repeating unit for the diol component that constitutes the polyester resin is represented by the formula

-[O-(L¹-O)ₘ]-

wherein L¹ represents an alkylene group, m represents an integer of 1 or more, and the sum of the carbon numbers of all of L¹'s in one repeating unit is 4 or more. For L¹ in particular an alkylene group having 4 or more carbon atoms is preferable, and for m in particular an integer of 1 or more is preferable. L¹ is most preferably an alkylene group having 4 to 8 carbon atoms, and m is most preferably 1 or 2.

A most preferred example of a crystalline resin having a melting point of 200°C or higher and a tensile modulus of elasticity at 25°C of 1000 MPa or less may be a polyester elastomer. A polyester elastomer is a copolymer having hard segments and soft segments.

A "hard segment" is a polyester segment having an aromatic dicarboxylic acid constituent component or a dicarboxylic acid constituent component in which a portion of the aromatic dicarboxylic acid constituent component is substituted with an aliphatic dicarboxylic acid, as a main acid constituent component. A "soft segment" is a polyester segment having a polyether obtained by polymerization of an aliphatic diol, as a polyol constituent component.

The aromatic dicarboxylic acid constituent component that constitutes the hard segment is preferably a terephthalic acid constituent component or a naphthalenedicarboxylic acid constituent component. Examples of other acid constituent components include aromatic dicarboxylic acids such as diphenyldicarboxylic acid, isophthalic acid, and sodium 5-sulfoisophthalilate; alicyclic dicarboxylic acid constituent components such as cyclohexanedicarboxylic acid and tetrahydrophthalic anhydride; and aliphatic dicarboxylic acid constituent components such as succinic acid, glutaric acid, adipic acid, azelaic acid, sebacic acid, dodecanedioic acid, dimer acids, and hydrogenated dimer acids.

The aliphatic or alicyclic diol constituent component that constitutes the hard segment is a constituent component formed mainly from an alkylene glycol having 2 to 8 carbon atoms. Specific examples include various constituent components such as ethylene glycol, 1,3-propylene glycol, 1,4-butanediol, 1,6-hexanediol, and 1,4-cyclohexanedimethanol. Among these, a 1,4-butanediol constituent component and a 1,6-hexanediol constituent component, both having 4 or more carbon atoms, are preferred.

It is more preferable that the component that constitutes the polyester of the hard segment (also referred to as a repeating unit) be formed from a butylene terephthalate unit or a butylene naphthalate unit, from the viewpoints of properties, moldability, and cost performance. Meanwhile, in the case of a naphthalate unit, a 2,6-form is preferred.

A specific preferred example of the repeating unit for the hard segment that constitutes the polyester resin is represented by the following formula (1-1) or (1-2).

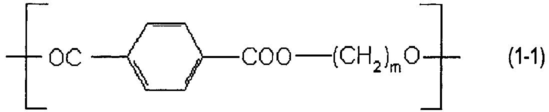

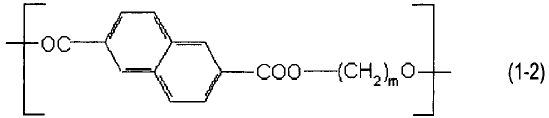

In formulas (1-1) and (1-2), m represents an integer of 1 or more, and is preferably 4 or more. The upper limit of m is not particularly limited, but the upper limit is practically 8 or less.

The aliphatic or alicyclic diol constituent component that constitutes the soft segment is a constituent component formed mainly from an alkylene glycol having 2 to 8 carbon atoms. Specific examples include various constituent components such as ethylene glycol, 1,3-propylene glycol, 1,4-butanediol, 1,6-hexanediol, and 1,4-cyclohexanedimethanol. Among these, a 1,4-butanediol constituent component and a 1,6-hexanediol constituent component, both having 4 or more carbon atoms, are preferred.

The aromatic dicarboxylic acid constituent component that constitutes the soft segment is preferably a terephthalic acid constituent component or a naphthalenedicarboxylic acid constituent component. Examples of other acid constituent components include aromatic dicarboxylic acids such as diphenyldicarboxylic acid, isophthalic acid, and sodium 5-sulfoisophthalilate; alicyclic dicarboxylic acid constituent components such as cyclohexanedicarboxylic acid and tetrahydrophthalic anhydride; and aliphatic dicarboxylic acid constituent components such as succinic acid, glutaric acid, adipic acid, azelaic acid, sebacic acid, dodecanedioic acid, dimer acids, and hydrogenated dimer acids.

A specific preferred example of the repeating unit for the soft segment that constitutes the polyester resin is represented by the following formula (2-1) or (2-2).

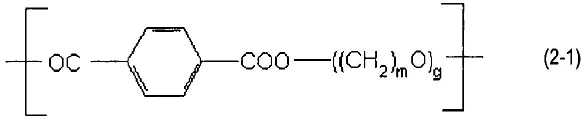

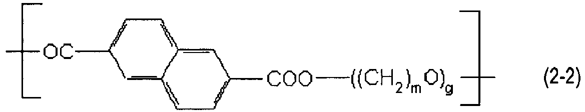

In formulas (2-1) and (2-2), g represents an integer of 10 or more. m represents an integer of 1 or more, and is preferably 4 or more. There are no particular limitations on the upper limit of g, but when the value g is in the range of more than 500, the elastic modulus is decreased, and sufficient hardness as an insulating layer of an electric wire cannot be obtained. Therefore, the upper limit is practically 500 or less. There are no particular limitations on the upper limit of m, but the upper limit is practically 8 or less.

The value of m for the polyester resin can be specified by a known method. For instance, the value of m can be specified by a ¹H-NMR (proton nuclear magnetic resonance) analysis. The number of carbon atoms of the aliphatic or alicyclic diol component in the hard segment and the soft segment can be determined by dissolving the polyester resin in a solvent of trifluoroacetic acid, and performing a ¹H-NMR spectroscopic analysis.

Examples of an available product preferably used as the polyester-based elastomer include "PELPRENE" (trade name, manufactured by Toyobo Co., Ltd.), "Hytrel" (trade name, manufactured by DU PONT-TORAY Co., Ltd.), and "PRIMALLOY" (trade name, manufactured by Mitsubishi Chemical Corporation).

The outermost layer of the multilayer insulated electric wire of the present invention is an extruded coating layer made by a resin having a tensile modulus of elasticity at 25°C of 1000 MPa or more. The upper limit of the tensile modulus of elasticity is not particularly limited, but the upper limit is practically 5000 MPa or lower.

When a resin material having a tensile modulus of elasticity at 25°C of less than 1000 MPa is used, when the multilayer insulated electric wire is wound into a coil form, due to its low tensile modulus of elasticity, the coating layer is susceptible to damage, and the voltage resistance characteristics are deteriorated.

The resin material having a tensile modulus of elasticity at 25°C of 1000 MPa or more is preferably a polyamide resin. When the outermost layer is formed from a polyamide resin, the electric wire acquires the most excellent flexibility, and it becomes advantageous at the time of coil processing. Examples of polyamide resins suitable for use in the outermost insulation layer include polyamide (also referred to as Nyron) 6,6 (such as A-125 (trade name) manufactured by Unitika Ltd. and Amilan (trade name) manufactured by Toray Industries, Ltd.), polyamide 4,6 (such as F-5000 (trade name) manufactured by Unitika Ltd. and C2000 (trade name) manufactured by Teijin Limited.), polyamide 6,T (Arlen (trade name) manufactured by Mitsui Oil, Co., Ltd.), and polyphthalamide (Amodel (trade name) manufactured by Solvay S. A.).

The multilayer insulated electric wire of the present invention is produced by sequentially extruding the insulating layers in such a manner that a first insulating layer having a desired thickness is extrusion-coated on the outer periphery of a conductor in an ordinary manner, a second insulating layer having a desired thickness is extrusion-coated on the outer periphery of the first insulating layer, and an outermost insulating layer. The whole thickness of the extruded layers formed in this manner is preferably set to within a range of 50 to 180 µm in the case of three layers. This is because when the whole thickness of the insulating layers is too thin, electrical characteristics of the obtained multilayer insulated electric wire having heat resistance are largely reduced and may be unsuitable for practical use. To the contrary, when the thickness is too thick, it is unsuitable for miniaturization and coil processing may become difficult. More preferred range of the whole thickness is 60 to 150 µm. It is preferable that the thickness of each of the layers is set to 20 to 60 µm.

As the embodiment of the transformer using the above-described multilayer insulated electric wire, a structure in which the primary winding 4 and the secondary winding 6 are formed without incorporating the insulating barrier and the insulating tape layer in the bobbin 2 on the ferrite core 1, as shown in Fig. 1, is preferred. The multilayer insulated electric wire of the present invention may be applied to other types of transformers.

### EXAMPLES

The present invention will be described in more detail based on examples given below, but the invention is not meant to be limited by these.

### [Examples 1 to 9 and Comparative Examples 1 to 3]

As conductors, annealed copper wires having a diameter of 1.0 mm were provided. Each multilayer insulated electric wire was manufactured by sequential extrusion coating on the conductor with the extrusion coating resins and the thickness of each layer ("thickness" described in Table 1) shown in Table 1. As for each of the obtained multilayer insulated electric wires, various kinds of characteristics were examined by the following methods.

### A: Thermal aging resistance test

Thermal resistance was evaluated by the testing method described below. An electric wire in a twisted winding form was subjected to heating at 200°C, and at every certain time, a voltage was applied at 2400 V for one second. The test was carried out at N = 10, and it was considered acceptable when the average value of the time taken until a short circuit occurred was more than 500 hours, and this was indicated as "A". It was considered unacceptable when the average value was less than 500 hours, and this was indicated as "B". When the average time was more than 700 hours, the electric wire was considered to have particularly excellent thermal aging resistance, and this was indicated as "AA".

### B. Thermal shock (Annex 5.5kV) test (also called Electric heat resistance test):

Thermal shock was evaluated by the following test method, in conformity to IEC standards Pub. 60950.

Ten turns of the multilayer insulated electric wires were wound around a mandrel with a diameter of 10 mm under a load of 9.4 kg. They were heated for 1 hour at 225°C, and then three cycles of heating them at 150°C for 21 hours and at 200°C for 3 hours were performed, and then they were kept in an atmosphere of 30°C and humidity 95% for 48 hours. Thereafter, a voltage of 5,500 V was applied thereto for 1 minute. When there was no electrical short-circuit, it was considered that it passed Class B of the standards, and indicated as "A". (The judgment was made with n=5. It was considered that it did not pass the test even when one is judged as NG and indicated as "B".)

### C: Reciprocating abrasion test

Abrasion resistance was tested using a reciprocating abrasion testing machine. A reciprocating abrasion testing machine is a testing machine which measures, when the surface of an insulated electric wire is scratched with a needle by applying a certain load, the number of occurrences of conductor exposure at the coating surface, and thereby the coating film strength can be measured. The abrasion resistance was evaluated by setting the load to 700 g and the number of reciprocating abrasion to 50 times. In Table 1, a sample exhibiting a number of reciprocating abrasions of 50 times or more was indicated as "A", and it was considered acceptable. A sample exhibiting a number of reciprocating abrasions of less than 200 times was indicated as "B", and it was considered unacceptable. A sample exhibiting a number of reciprocating abrasions of more than 80 times was considered to have particularly excellent abrasion resistance, and this was indicated as "AA".

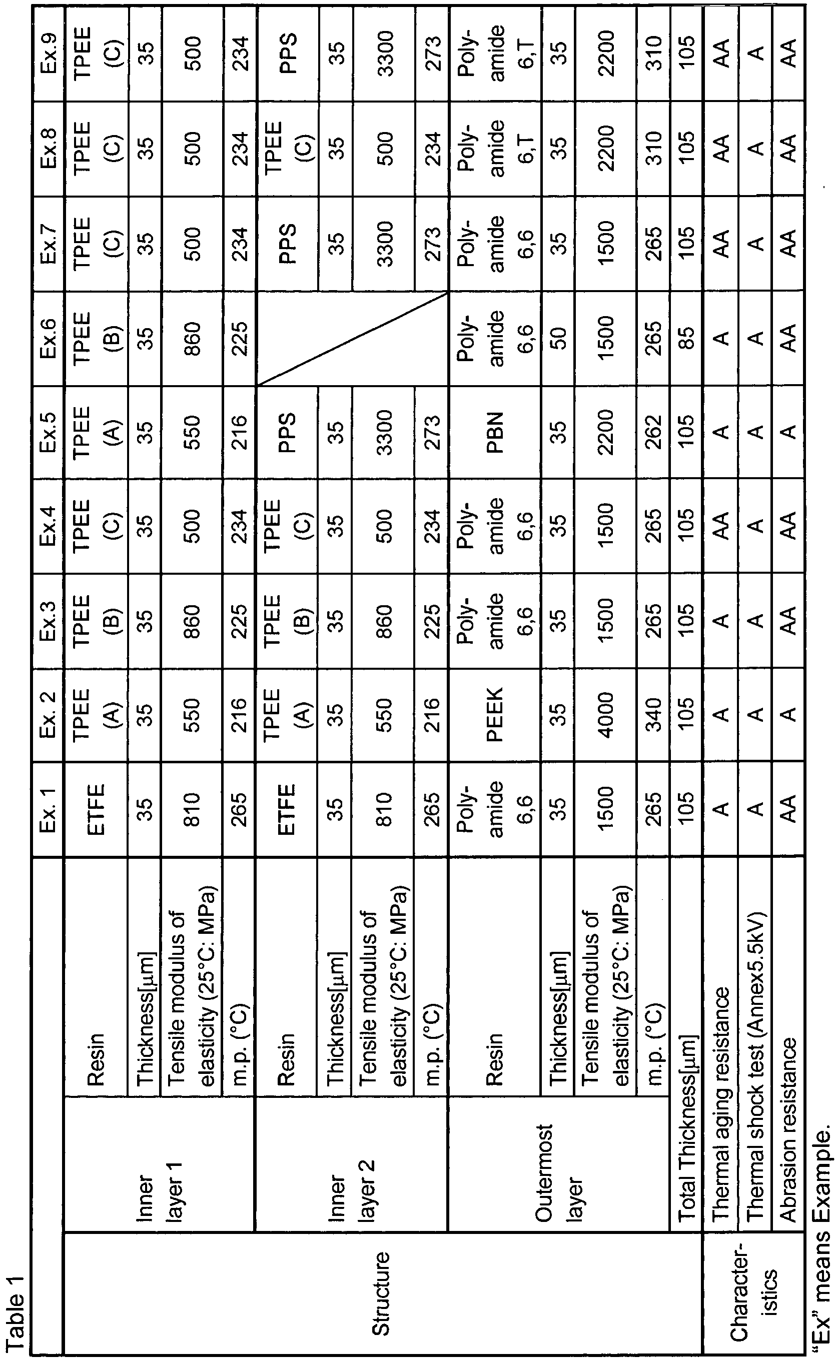

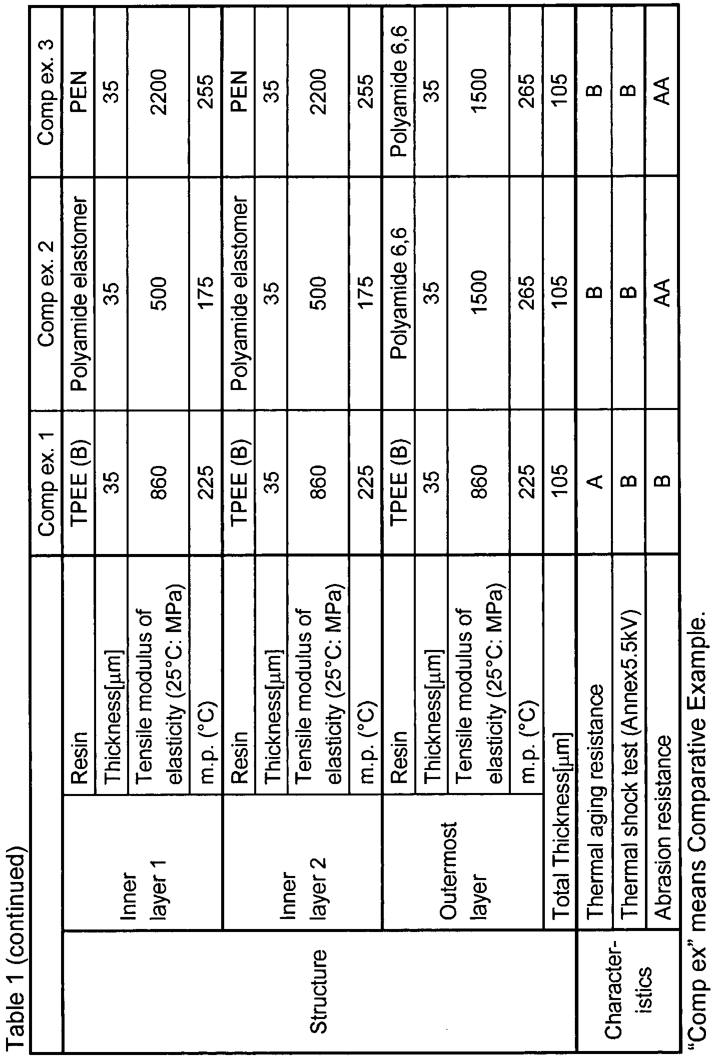

Abbreviations indicating the resins in Table 1 are as follows.
- ETFE:: FLUON C-55AP (trade name, manufactured by Asahiglass Co., Ltd.)
- TPEE(A):: PELPRENE 6001 (trade name, manufactured by Toyobo Co., Ltd.) Polyester elastomer
- TPEE(B):: HYTREL 2571 (trade name, manufactured by DU PONT-TORAY Co., Ltd.) Polyester elastomer
- TPEE(C):: PELPRENE EN5000 (trade name, manufactured by Toyobo Co., Ltd.) Polyester elastomer
- PPS:: DICPPS FZ2200A8 (trade name, manufactured by DIC Corporation), Polyphenylene sulfide resin
- PEEK:: 381 G (trade name, manufactured by Victex plc.) Polyetheretherketone resin
- Polyamide 6,6:: FDK-1 (trade name, manufactured by Unitika Ltd.) Polyamide 6,6 resin
- Polyamide 6,T:: ARLEN AE4200 (trade name, manufactured by Mitsui Chemicals, Inc.) Polyamide 6,T resin
- PET:: TR-8550 (trade name, manufactured by Teijin Ltd.), Polyethylene terephthalate resin
- Polyamide elastomer:: PA-260 (trade name, manufactured by T&K TOKA Corporation) Polyetheresteramide elastomer
- PBN:: Teijin PBN (trade name, manufactured by Teijin Ltd.), Polybutylene naphthalate resin

TPEE(A) is a polyester elastomer which is composed of a hard segment with m = 4 in the formula (1-1), and a soft segment with m = 6 and g ≥ 10 in the formula (2-1).

TPEE(B) is a polyester elastomer which is composed of a hard segment with m = 4 in the formula (1-1), and a soft segment with m = 4 and g ≥ 10 in the formula (2-1).

TPEE(C) is a polyester elastomer which is composed of a hard segment with m = 4 in the formula (1-2), and a soft segment with m = 4 and g ≥ 10 in the formula (2-2).

The results shown in Table 1 revealed the following.

In Comparative Example 1, since a resin having a low tensile modulus of elasticity was provided for the outermost layer, the coating film was damaged at the time of mandrel winding, and the voltage resistance characteristics were not satisfactory. In Comparative Example 2, since a resin having a low melting point was provided for the inner layer, heat resistance was not satisfactory. In Comparative Example 3, when a resin having a high tensile modulus of elasticity was provided for the inner layer, the coating film properties deteriorated after thermal aging, and cracking or damage occurred in the coating film. Accordingly, the thermal aging resistance and the electrical characteristics after thermal aging were not satisfactory.

On the other hand, Examples 1 to 9 were all considered acceptable in the thermal aging resistance test, thermal shock resistance test, and the reciprocating abrasion test. Particularly, a examples using a polyamide resin in the outermost layer exhibited excellent abrasion resistance. In addition, when TPEE(C) having a hard segment with m = 4 in the formula (1-2) and a soft segment with m = 4 in the formula (2-2) is used for an insulating layer other than the outermost layer, results with particularly excellent thermal aging resistance were obtained.

As such, it was found that the multilayer insulated electric wire of the present invention has excellent heat resistance and high voltage thermal shock resistance characteristics.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2012-070843 filed in Japan on March 27, 2012, which is entirely herein incorporated by reference.

### REFERENCE SIGNS LIST

1: Ferrite core
2: Bobbin
3: Insulating barrier
4: Primary winding
4a: Conductor
4b, 4c, 4d: Insulating layers
5: Insulating tape
6: Secondary winding
6a: Conductor
6b, 6c, 6d: Insulating layers

## Claims

1. A multilayer insulated electric wire including two or more insulating layers, wherein at least one layer of the insulating layers other than the outermost layer is an insulating layer containing a resin having a melting point of 200°C or higher and a tensile modulus of elasticity at 25°C of 1000 MPa or less, and the multilayer insulated electric wire is coated with a resin material having a tensile modulus of elasticity at 25°C of 1000 MPa or more as the outermost layer.

2. The multilayer insulated electric wire according to Claim 1, wherein the resin that forms the insulating layers other than the outermost layer is a polyester resin in which a repeating unit for the diol component that constitutes the polyester resin is represented by the formula
-[O-(L¹-O)ₘ]-
wherein L¹ represents an alkylene group, m represents an integer of 1 or more, and the sum of the carbon numbers of all of L¹'s in one repeating unit is 4 or more.

3. The multilayer insulated electric wire according to Claim 2, wherein L¹ is an alkylene group having 4 or more carbon atoms, and m is an integer of 1 or more.

4. The multilayer insulated electric wire according to any one of Claims 1 to 3, wherein the outermost layer is an extruded coating layer containing a polyamide resin.

5. Electric or electronic equipment formed by using the multilayer insulated electric wire according to any one of Claims 1 to 4 as a coil or lead wire of a transformer that is incorporated into the electric or electronic equipment.
